# EUROPEAN PATENT APPLICATION

(11) **EP 4 730 191 A1**
(43) Date of publication of application: **22.04.2026**
(21) Application number: 25208686.3
(22) Date of filing: 14.10.2025
(51) Int. Cl.: G06F 40/123, G06F 40/216, G06F 40/30, G06F 40/35, G06F 40/44, G06F 40/56

(54) **IMPROVED RETRIEVAL AUGMENTED GENERATION LANGUAGE MODEL SYSTEM**

(30) Priority: 15.10.2024 US 202418916682
(71) Applicant: Intuit Inc., Mountain View, CA 94043 (US)
(72) Inventor: COHEN, Linoy, Mountain View, 94043 (US); VETZLER, Matan, Mountain View, 94043 (US); VASSERTAIL AZROEL, Lior, Mountain View, 94043 (US); AHARON, Kfir, Mountain View, 94043 (US)
(74) Representative: D Young & Co LLP

(57) **Abstract**

A method of improving a retrieval augmented generation (RAG) language model ensemble. The language models are executed on first prompts to generate test outputs. Each of the first prompts includes a natural language question corresponding to correct answers only obtainable from the context. The prompts are assigned to each of the language models. The prompts avoid referencing the context. A removed question is removed to generate filtered questions. The removed question includes a corresponding one of the natural language questions for which a corresponding test output of the test outputs represents a correct answer relative to the correct answers. The language models are executed on filtered prompts to generate generated answers. Each of the filtered prompts includes the filtered questions and a corresponding command to return the generated answers from the context. A semantic model is executed on the generated answers to generate scores representing accuracies of the language models.

## Description

### BACKGROUND

Language models, such as large language models (*e.g.,* CHAT GPT^{®}), are deep learning machine learning models (*e.g.,* neural networks) trained to process natural language input and generate natural language output. For example, a language model may be the software engine that drives a chatbot.

No known mechanism exists for determining exactly how a machine learning model, including a language model, generates an output. Thus, in the case of language models, there is no known mechanism for tracing the logic that a language model uses to generate a natural language output.

The above outlined technical problem may present a particular difficulty in a machine learning technique known as retrieval augmented generation (RAG). Briefly, a RAG system issues a command to a language model to refer to a data source known as a "context," when answering questions. In some applications, a programmer desires to force the model to use only the context to answer a question.

However, because no known mechanism exists for determining exactly how the model generates an output, currently there is no way to determine whether the model truly avoids using the model's own capabilities to answer a question. Furthermore, language models sometimes unpredictably output clearly incorrect answers (a phenomenon sometimes referred to as "model hallucination"). Thus, even if a model generates a correct answer, relative to the information in the context, the model output still cannot be trusted as being derived only from the context. While forcing the model to refer only to the context is important, such uncertainty may be unacceptable.

Thus, a technical problem exists, specifically developing a RAG language model system that will, with certainty, only reference the context.

### SUMMARY

Particular aspects are set out in the appended independent claims. Various optional embodiments are set out in the dependent claims.

One or more embodiments provide for a method of improving a retrieval augmented generation (RAG) language model ensemble including language models and a context assigned to the RAG language model ensemble. The method includes executing the language models on first prompts to generate test outputs. Each of the first prompts includes one of natural language questions corresponding to correct answers. The correct answers are only obtainable from the context. The prompts are assigned to each of the language models. Each of the prompts avoids referencing the context. The method also includes removing, from the natural language questions, a removed question to generate filtered questions. The removed question includes a corresponding one of the natural language questions for which a corresponding test output of the test outputs represents a correct answer relative to the correct answers. The method also includes executing the language models on filtered prompts to generate generated answers. Each of the filtered prompts includes the filtered questions and a corresponding command to return the generated answers from the context. The method also includes executing a semantic model on the generated answers to generate scores representing accuracies of the language models.

One or more embodiments also provide for a system for improving a retrieval augmented generation (RAG) language model ensemble including language models and a context assigned to the RAG language model ensemble. The system includes a computer processor and a server in communication with the computer processor. The system also includes a data repository in communication with the computer processor. The data repository stores the context and natural language questions. The data repository also stores correct answers, only obtainable from the context, to the natural language questions. The data repository also stores first prompts, each including one of the natural language questions. The first prompts avoids referencing the context. The data repository also stores a removed question including a corresponding one of the natural language questions for which a corresponding test output of test outputs of the language models represents a correct answer relative to the correct answers. The data repository also stores filtered questions including the natural language questions less the removed question. The data repository also stores filtered prompts including the filtered questions and a corresponding command to return generated answers from the context. The data repository also stores scores representing accuracies of the language models. The system also includes the language models which, when executed by the computer processor generates the test outputs when executed on the first prompts, and generates the generated answers when executed on the filtered prompts. The system also includes a semantic model which, when executed by the computer processor on the generated answers generates the scores. The system also includes a server controller which, when executed by the computer processor selects, according to the scores, a selected language model from among the language models. The server controller, when executed, also deploys the selected language model to the server for execution of the selected language model.

One or more embodiments also provide for a method of improving a retrieval augmented generation (RAG) language model ensemble including language models and a context assigned to the RAG language model ensemble. The method includes executing the language models on first prompts to generate test outputs. Each of the first prompts includes one of natural language questions corresponding to correct answers. The correct answers are only obtainable from the context. The prompts are assigned to each of the language models. Each of the prompts avoids referencing the context. The method also includes removing, from the natural language questions, a removed question to generate filtered questions. The removed question includes a corresponding one of the natural language questions for which a corresponding test output of the test outputs represents a correct answer relative to the correct answers. The method also includes executing the language models on filtered prompts to generate generated answers. Each of the filtered prompts includes the filtered questions and a corresponding command to return the generated answers from the context. The method also includes executing a semantic model on the generated answers to generate scores representing accuracies of the language models. The method also includes selecting, according to the scores, a selected language model from the language models. The method also includes deploying the selected language model on a server. The method also includes receiving a user query from a user device. The method also includes executing the selected language model on the user query to generate a query response. The method also includes returning the query response to the user device.

Other aspects of one or more embodiments will be apparent from the following description and the appended claims.

### BRIEF DESCRIPTION OF DRAWINGS

FIG. 1A and FIG. 1B show a computing system, in accordance with one or more embodiments.
FIG. 2 shows a flowchart of a method for generating a retrieval augmented generation language model system, in accordance with one or more embodiments.
FIG. 3 shows a dataflow for a method for generating a retrieval augmented generation language model system.
FIG. 4A and FIG. 4B show a graphical user interface for efficiently displaying results of a method for a retrieval augmented generation language model system.
FIG. 5A and FIG. 5B show an example of a computing system, in accordance with one or more embodiments.

Like elements in the various figures are denoted by like reference numerals for consistency.

### DETAILED DESCRIPTION

One or more embodiments are directed to a retrieval augmented generation (RAG) language model system. The RAG language model system solves at least the above-mentioned technical problem. The technical problem, again, is developing a RAG language model system that will, with certainty, only reference the context. One or more embodiments solve the technical problem by the following procedure.

Initially, one or more embodiments test the responses of an ensemble of language models to questions generated from the context, but the models are commanded to avoid referencing the context when answering the questions. If a model generates a correct answer to a question, then the question is removed from the list of questions. The process may be repeated until none of the models return correct answers without reference to the context.

Once the model ensemble does not answer any of the questions without reference to the context, the remaining questions may be referred to as a set of removed questions. The removed questions are then resubmitted to each language model of the ensemble, but this time the language models are commanded to refer to the context to answer the removed questions.

The responses generated by the language model ensemble are evaluated for correctness. For example, a semantic language model may compare the responses to the known correct answers in the context. Accordingly, numerical scores are generated that represent the relative accuracies of each of the language models in the ensemble with respect to answering the questions correctly.

The language model or models having the best score or scores *(e.g.,* the highest scoring model) is then deployed to a server. The selected language model then may be used to answer questions from users.

The above described procedure may be performed with respect to a single language model. In other words, the process described above may be the same, but the process stops once the model is scored. The model score may be a representation of the accuracy of the model with respect to the use of the model in a RAG system.

Stated differently, one or more embodiments offer a solution to ascertain the context retrieval efficacy of language models, such as large language models. One or more embodiments create context-independent queries which compel the models to exhaust the model's prior, general knowledge, achieving a zero benchmark score. By reintroducing context and re-evaluating the models, one or more embodiments make the model dependent on the model's context extraction skills, without being able to draw the relevant information from the model's internal world knowledge. Consequently, one or more embodiments provide for an accurate, comprehensive evaluation of the model's capabilities, effectively negating any inaccurate outcomes generated from the model's pre-existing knowledge.

Thus, one or more embodiments provide a practical application as a solution to another technical problem, that of adequately assessing a language model's ability to extract relevant data in a given context and correctly answering a user's query based on the extracted information. One or more embodiments resolve the issue of the model incorrectly answering from the model's pre-existing general knowledge during a RAG-based evaluation, which may lead to an inaccurate representation of the model's context retrieval skills and result in biased evaluation scores. Thus, one or more embodiments provide for a more genuine and precise analysis of the model's capability to retrieve and use contextual information for generating responses.

As a specific example, CHAT GPT-4^{®} may be used to extract specific questions directly from context in the form of long articles. The questions are designed to require contextual information (*i.e.,* information from the context) for correct answers that can only be found in the context.

Next, the context-specific questions are used without context to form a benchmark. At this stage, a determination is made if the model may answer the questions based on the model's pre-existing world knowledge acquired during pre-training.

Then, the correctly answered questions are removed. The process is repeated until a benchmark score of zero is achieved, indicating that the language model is unable to correctly answer the questions solely using the model's non-contextual knowledge. What remains are a set of removed questions, which includes the original questions less the questions removed from the original question set.

Upon the language model achieving the zero score, the context is reintroduced to prompts which also includes the removed questions. The language models are executed and evaluated again, generating new benchmark scores. Because the removed questions are known to be answerable by the models only by reference to the context, the performance of the language models in the specific context of a RAG system may be evaluated accurately. When multiple models are so evaluated, the best scoring model or set of models may be selected for deployment to a server or to an enterprise system.

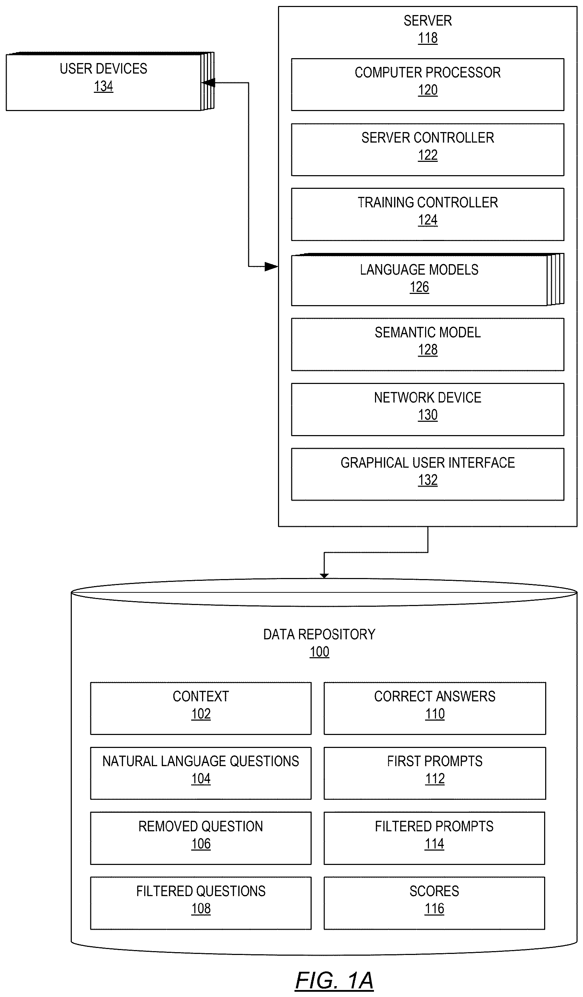

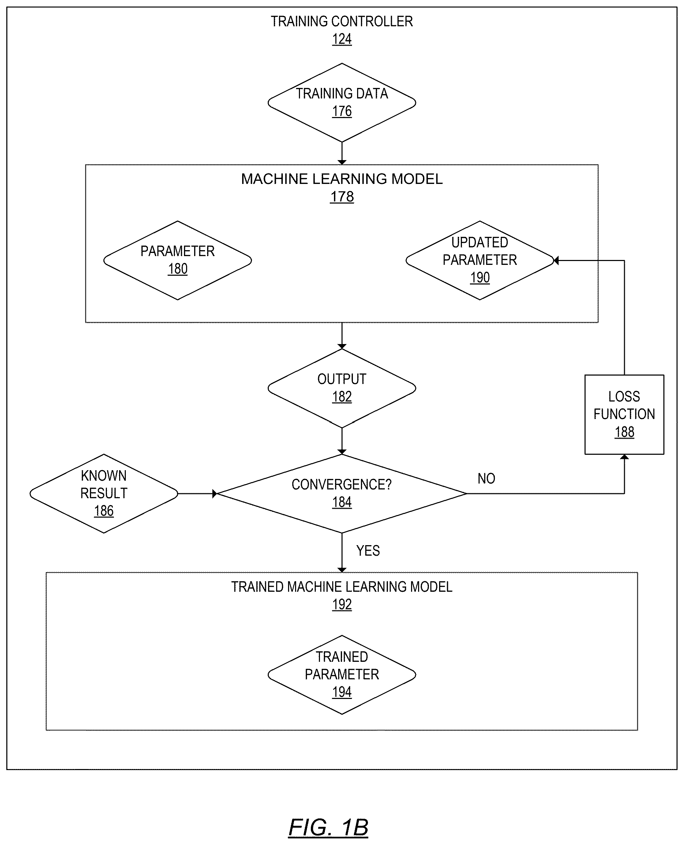

Attention is now turned to the figures. FIG. 1 shows a computing system, in accordance with one or more embodiments. More specifically, the computing system shown in FIG. 1 may be a system for improving a RAG language model ensemble including a number of language models (126), defined below, and a context (102), defined below, assigned to the RAG language model ensemble.

The system shown in FIG. 1 includes a data repository (100). The data repository (100) is a type of storage unit or device (*e.g.,* a file system, database, data structure, or any other storage mechanism) for storing data. The data repository (100) may include multiple different, potentially heterogeneous, storage units, and/or devices.

The data repository (100) stores a context (102). The context (102) is one or more documents that contain natural language text. Natural language text is data that a computer may display as alphanumeric characters or special characters (*e.g.,* "*," "!," "@," "^," *etc*.). The context (102) also may include formatting of the natural language text. For example, the context (102) may contain a table of numbers (*e.g.,* a table of income tax brackets and tax rates), where the arrangement of the numbers or borders around the text and numbers may contain meaning.

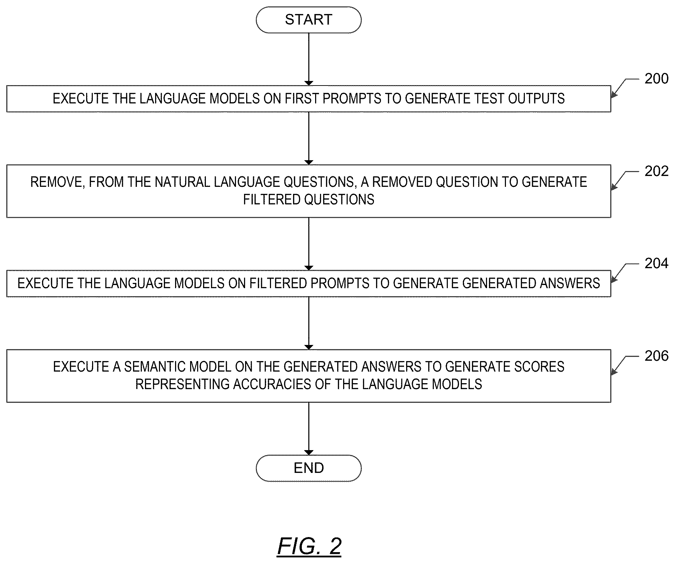

The data repository (100) also stores a number of natural language questions (104). The natural language questions (104) are expressed as alphanumeric characters or special characters. The natural language questions (104) are generated and used as explained with respect to FIG. 2.

The data repository (100) also stores a removed question (106). The removed question (106) includes a corresponding one of the natural language questions for which a corresponding test output of test outputs of the language models represents a correct answer relative to the correct answers. In other words, the removed question (106) is one of the natural language questions (104) that is removed from the natural language questions (104).

The data repository (100) also stores a number of filtered questions (108). including the questions less the removed question. The filtered questions (108) are what remains from the natural language questions (104) after the removed question (106) (or multiple removed questions) have been removed, as described with respect to FIG. 2. In other words, the filtered questions (108) are ones of the natural language questions (104) that still remain after the removed question (106) has been removed.

The data repository (100) also stores a number of correct answers (110). The correct answers (110) are answers, generated by the language models (126) (defined below) in response to the natural language questions (104), for which the corresponding answer provided by the model is correct. The correct answers (110) are obtainable only from the context (102). Thus, the correct answers (110), when answered by the language models (126) without access to the context (102), represent the ability of the language models (126) to answer corresponding ones of the natural language questions (104) without reference to the context (102). Use and import of the correct answers (110) is described with respect to FIG. 2.

One or more embodiments also may refer to a "filtered correct answer." A filtered correct answer is an answer, that is correct, to one of the filtered questions (108).

The data repository (100) also stores a number of first prompts (112). The first prompts (112) are prompts provided to the language models (126) (defined below). A prompt is a command to a large language model that instructs the large language model how to execute a query, thereby placing constraints on the execution of the language model. In an embodiment, each of the first prompts (112) is generated for a corresponding one of the natural language questions.

For reasons explained with respect to FIG. 2, the first prompts (112) avoid referencing the context (102). In other words, the first prompts (112) do not instruct the language models (126) to reference the context (102) when executing the first prompts (112). In another embodiment, the first prompts (112) may explicitly instruct the language models (126) to avoid referencing the context (102) when attempting to answer the natural language questions (104).

The data repository (100) also stores a number of filtered prompts (114). The filtered prompts (114) are, like the first prompts (112), commands to the language models (126) to execute on natural language queries. However, this time the filtered prompts (114) execute on the filtered questions (108), rather than on the natural language questions (104). Thus, the filtered prompts (114) include the filtered questions (108) (or a reference to the filtered questions (108)). Additionally, the filtered prompts (114) each include a corresponding command to return generated answers from the context (102). In other words, the filtered prompts (114) instruct the language models (126) to return answers to the natural language questions (104) by generating answers only from the context (102).

The data repository (100) also stores a number of scores (116). The scores (116) are numbers that represent accuracies of the language models (126) (defined below). The scores (116) specifically represent the average of semantic distances of answers generated by the language models (126) in response to the filtered prompts (114), relative to known correct answers present in the context (102).

For example, assume that one of the language models (126) generates answers to the filtered questions (108), and is instructed by one of the filtered prompts (114) to reference only the context (102) when generating an answers. Each of the answers is compared, by a semantic model (128) (defined below), to a known correct answer present in the context (102). The semantic model (128) outputs a corresponding semantic closeness score for each of the answers. The scores are averaged, and the average score is one of the scores (116) that represents an accuracy of one of the language models (126).

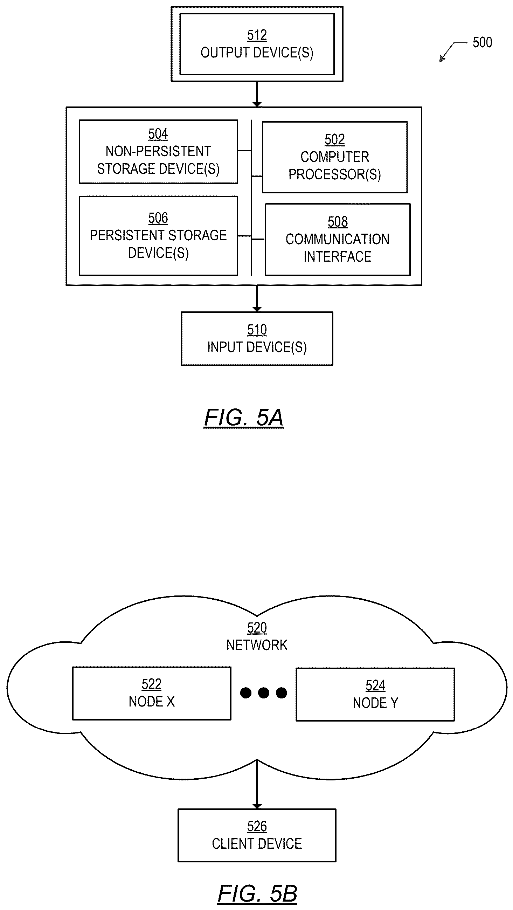

The system shown in FIG. 1A may include other components. For example, the system shown in FIG. 1A also may include a server (118). The server (118) is one or more computer processors, data repositories, communication devices, and supporting hardware and software. The server (118) may be in a distributed computing environment. The server (118) is configured to execute one or more applications, such as the training controller (124), the language models (126), the semantic model (128). The server (118) also may control the network device (130). The server (118) also may generate the graphical user interface (132). An example of a computer system and network that may form the server (118) is described with respect to FIG. 5A and FIG. 5B.

The server (118) includes a computer processor (120). The computer processor (120) is one or more hardware or virtual processors which may execute computer readable program code that defines one or more applications such as the training controller (124), the language models (126), the semantic model (128). An example of the computer processor (120) is described with respect to the computer processor(s) (502) of FIG. 5A.

The server (118) also may include a server controller (122). The server controller (122) is software or application specific hardware which, when executed by the computer processor (120), controls and coordinates operation of the software or application specific hardware described herein. Thus, the server controller (122) may control and coordinate execution of the training controller (124), the language models (126), the semantic model (128). The server controller (122) also may control and coordinate execution of the programs along with receiving and transmitting information via the network device (130). The server controller (122) also may control and coordinate execution of the programs along with generating the graphical user interface (132), as described with respect to FIG. 2.

The server controller (122) also may be programmed to perform specific steps with respect to FIG. 2. For example, the server controller (122) may select, according to the scores, a selected language model from among the language models, and deploy the selected language model to the server for execution of the selected language model, as explained further with respect to FIG. 2.

The server (118) also may include a training controller (124). The training controller (124) is software or application specific hardware which, when executed by the computer processor (120), trains one or more machine learning models (e.g., the language models (126), and the semantic model (128)). The training controller (124) is described in more detail with respect to FIG. 1B.

The server (118) also includes a number of language models (126). The language models (126) are natural language processing machine learning models. An example of the language models (126) may be a large language model, such as CHATGPT^{®}. However, many different language models may be used. Use of the language models (126) is described with respect to FIG. 2.

The server (118) also includes a semantic model (128). The semantic model (128) is software or application specific hardware which, when executed by the computer processor (120), analyzes the semantic similarity of natural language words or phrases and numerically quantifies the similarity. The semantic model (128) may use a latent semantic analysis, a latent Dirichlet allocation, or hidden Markov models to perform the semantic analysis. As explained further with respect to FIG. 2, the semantic model (128) may, when executed by the processor on the generated answer, generate the scores (116).

The server (118) also may include a network device (130). The network device (130) is a communication device in communication with the computer processor (120) and programmed to receive a user query from a user device, such as the user devices (134) defined below. An example of the network device (130) is the communication interface (508) shown in FIG. 5A. As described with respect to FIG. 2, the server controller (122) may be programmed to generate a response by executing a selected language model, selected from among the language models (126), on the user query mentioned above, and to return the response to the user device.

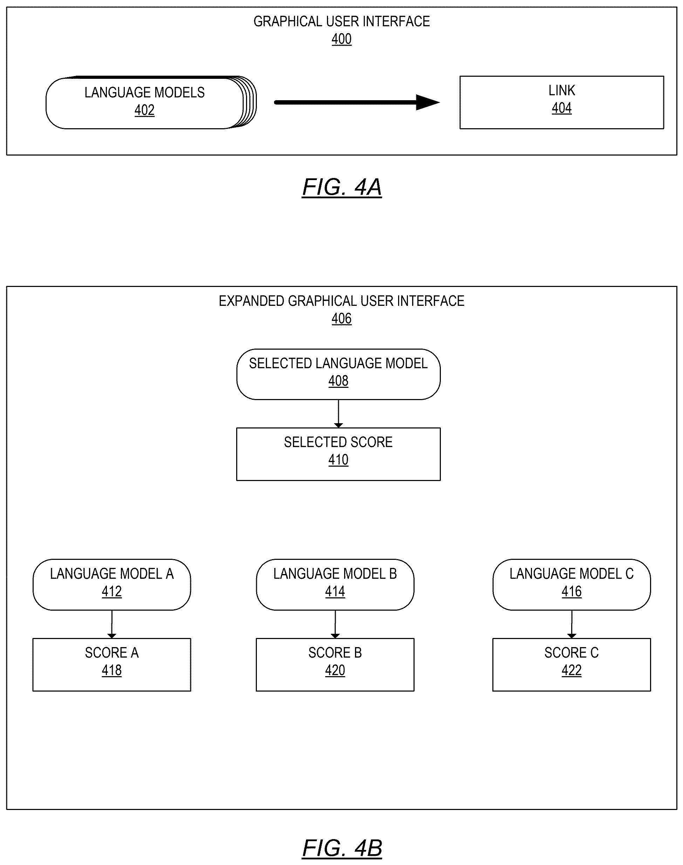

The server (118) also may include a graphical user interface (132). The graphical user interface (132) is an interface displayed on a display device. The graphical user interface (132) includes a number of widgets (buttons, drop-down menus, dialog boxes, *etc.)* with which a user may interact. The graphical user interface (132) may permit one or more user devices (134) to interact with the language models (126), the semantic model (128), the server controller (122), the training controller (124), and to display links to the scores (116) (as explained with respect to FIG. 4A and FIG. 4B).

The system shown in FIG. 1A also may include one or more user devices (134). The user devices (134) may be considered remote or local. A remote user device is a device operated by a third-party (e.g., an end user of a chatbot) that does not control or operate the system of FIG. 1A. Similarly, the organization that controls the other elements of the system of FIG. 1A may not control or operate the remote user device. Thus, a remote user device may not be considered part of the system of FIG. 1A.

In contrast, a local user device is a device operated under the control of the organization that controls the other components of the system of FIG. 1A. Thus, a local user device may be considered part of the system of FIG. 1A.

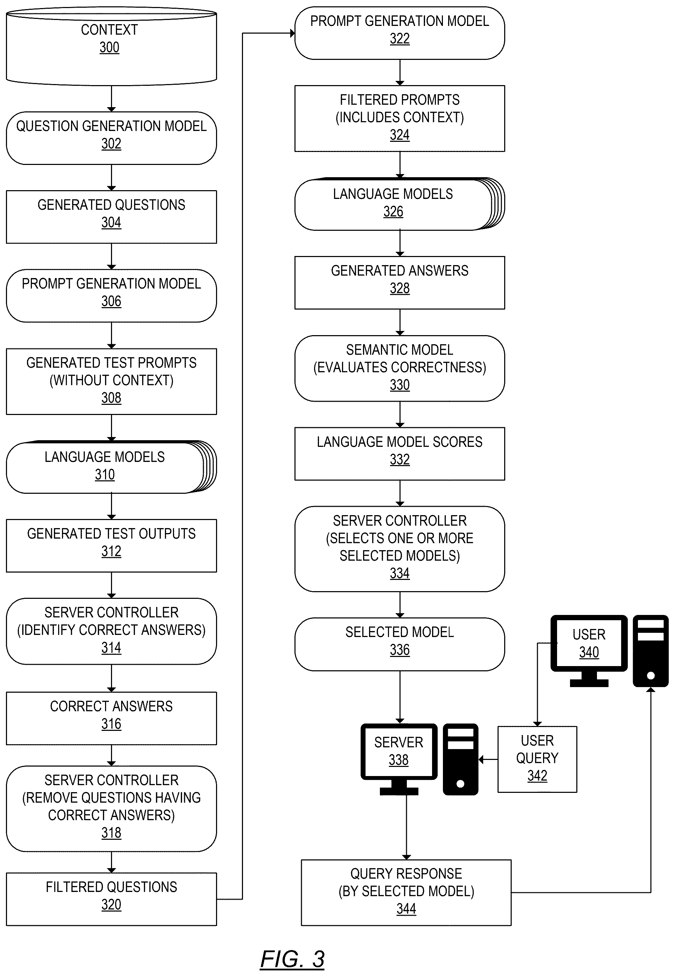

In any case, the user devices (134) are computing systems (e.g., the computing system (500) shown in FIG. 5A) that communicate with the server (118). A user query, such as the user query (342) of FIG. 3, may be received via the user devices (134), or an automated process. In another embodiment, one or more of the user devices (134) may be operated by a computer technician that services the various components of the system shown in FIG. 1A.

Attention is turned to FIG. 1B, which shows the details of the training controller (124). The training controller (124) is a training algorithm, implemented as software or application specific hardware, that may be used to train one or more of the machine learning models described with respect to the computing system of FIG. 1A.

In general, machine learning models are trained prior to being deployed. The process of training a model, briefly, involves iteratively testing a model against test data for which the final result is known, comparing the test results against the known result, and using the comparison to adjust the model. The process is repeated until the results do not improve more than some pre-determined amount, or until some other termination condition occurs. After training, the final adjusted model is applied to unknown data (*i.e.,* data for which the actual result is not known) in order to make predictions.

Some machine learning models may be applied to vector data structures. A vector is a computer readable data structure. A vector may take the form of a matrix, an array, a graph, or some other data structure. However, a frequently used vector form is a one by N matrix, where each cell of the matrix represents the value for one feature. As described above, a feature is a topic of data (*e.g.,* a color of an object, the presence of a word or alphanumeric text, a physical measurement type, *etc*.)*.* A value is a numerical or other recorded specification of the feature. For example, if the feature is the word "cat," and the word "cat" is present in a corpus of text, then the value of the feature may be "1" (to indicate a presence of the feature in the corpus of text).

In one or more embodiments, some of the data in the data repository (100) of FIG. 1A may be stored in the form of one or more vectors. For example, the context (102), the natural language questions (104), the filtered questions (108), the correct answers (110), the first prompts (112), and the filtered prompts (114) may be expressed as vectors. However, in most cases, because the information is supplied to language models (126), the input provided by a user is in a natural language.

Returning to the operation of the training controller (138), training starts with training data (176), which may be expressed in vector form. The training data (176) may be the general natural language questions (104), removed question (106), or filtered questions (108) from FIG. 1A, expressed in vector form.

The training data (176) may be labeled. The labels represent a known result. Thus, a label applied to a question in the natural language questions (104) may be that the question can, or cannot, be answered correctly without reference to the context (102).

Thus, the training data (176) may be data for which the final result is known with certainty. Thus, if the prediction of a model does not match the label, then the weights of the layers in the corresponding language model may be updated and the training process iterated.

More generally, the training data (176) is provided as input to the machine learning model (178), language models (126), or the semantic model (128) of FIG. 1A. The machine learning model (178) may be characterized as a program that has adjustable parameters. The program is capable of learning and recognizing patterns to make predictions. The output of the machine learning model (178) may be changed by changing one or more parameters of the algorithm, such as the parameter (180) of the machine learning model (178). The parameter (180) may be one or more weights, the application of a sigmoid function, a hyperparameter, or possibly many different variations that may be used to adjust the output of the function of the machine learning model (178).

One or more initial values are set for the parameter (180). The machine learning model (178) is then executed on the training data (176). The result is an output (182), which is a prediction, a classification, a value, or some other output which the machine learning model (178) has been programmed to output.

The output (182) is provided to a convergence process (184). The convergence process (184) is programmed to achieve convergence during the training process. Convergence is a state of the training process, described below, in which a pre-determined end condition of training has been reached. The pre-determined end condition may vary based on the type of machine learning model (178) being used (supervised versus unsupervised machine learning), or may be pre-determined by a user (*e.g.,* convergence occurs after a set number of training iterations, described below).

In the case of supervised machine learning, the convergence process (184) compares the output (182) to a known result (186). The known result (186) is stored in the form of labels for the training data (176). For example, the known result (186) for a particular entry in an output (182) vector of the machine learning model (178) may be a known value, and that known value is a label that is associated with the training data (176).

Continuing the example of supervised machine learning model training, a determination is made whether the output (182) matches the known result (186) to a pre-determined degree. The pre-determined degree may be an exact match, a match to within a pre-specified percentage, or some other metric for evaluating how closely the output (182) matches the known result (186). Convergence may occur when the known result (186) matches the output (182) to within a pre-specified percentage. Then convergence may occur when more than a threshold number of predictions correctly match the corresponding labels.

For example, the threshold may be 95%. In this case, when the accuracy reaches 95% (representing that in 95 times out of 100 query predictions the language model or semantic model in question correctly predicted "block" or "allow") then convergence occurs.

In the case of unsupervised machine learning, the convergence process (184) may be compared to the output (182) or to a prior output in order to determine a degree to which the current output changed, relative to the immediately prior output or to the original output. Once the degree of change fails to satisfy the threshold degree of change, then the machine learning model may be considered to have achieved convergence. Alternatively, an unsupervised model may determine pseudo labels to be applied to the training data and then achieve convergence as described above for a supervised machine learning model. Other machine learning training processes exist, but the result of the training process may be convergence.

If convergence has not occurred (a "no" at the convergence process (184)), then a loss function (188) is generated. The loss function (188) is a program which adjusts the parameter (180) (one or more weights, settings, *etc*.) in order to generate an updated parameter (190). The basis for performing the adjustment is defined by the program that makes up the loss function (188). The program may be an algorithm which attempts to guess how the parameter (180) may be changed so that the next execution of the machine learning model (178), using the training data (176) with the updated parameter (190), will have an output (182) that is more likely to result in convergence. In this manner, the next execution of the machine learning model (178) is more likely to match the known result (186) (supervised learning), or which is more likely to result in an output (182) that more closely approximates the prior output (one unsupervised learning technique), or which otherwise is more likely to result in convergence.

In any case, the loss function (188) is used to specify the updated parameter (190). As indicated, the machine learning model (178) is executed again on the training data (176), this time with the updated parameter (190). The process of execution of the machine learning model (178), execution of the convergence process (184), and the execution of the loss function (188) continues to iterate until convergence.

Upon convergence (a "yes" result at the convergence process (184)), the machine learning model (178) is deemed to be a trained machine learning model (192). The trained machine learning model (192) has a final parameter, represented by the trained parameter (194). Again, the trained parameter (194) shown in FIG. 1B may be multiple parameters, weights, settings, *etc.*

During deployment, the trained machine learning model (192) with the trained parameter (194) is executed again, but this time on unknown data (which may be in the form of an unknown data vector) for which the final result is not known. The output of the trained machine learning model (192) is then treated as a prediction of the information of interest relative to the unknown data.

While FIG. 1A and FIG. 1B shows a configuration of components, other configurations may be used without departing from the scope of one or more embodiments. For example, various components may be combined to create a single component. As another example, the functionality performed by a single component may be performed by two or more components.

FIG. 2 shows a flowchart of a method for generating an improved retrieval augmented generation language model system, in accordance with one or more embodiments. The method of FIG. 2 may be implemented using the system of FIG. 1 and one or more of the steps may be performed on or received at one or more computer processors. The method of FIG. 2 may be characterized as a method of improving a RAG language model ensemble including a number of language models and a context assigned to the RAG language model ensemble.

Step 200 includes executing the language models on first prompts to generate test outputs. Executing the language models on the first prompts may be performed by providing the first prompts as input to the language models and then commanding the language models to execute. Each of the first prompts includes one of the natural language questions corresponding to correct answers. The correct answers are only obtainable from the context. The prompts are assigned to each of the language models. Each of the prompts avoids referencing the context. In an embodiment, the prompts may explicitly command the language models to avoid referencing the context when generating an answer.

A reason for the language models to avoid using the context at step 200 is to check whether the language models will generate a correct answer even without the context. If any given language model can generate a correct answer to a given question from the given language model's own store of information and training, then such a question is to be excluded, as in step 202 below. The reason is that one of the goals of the method of FIG. 2 is to test each model's ability to retrieve information only from the context and not from any other source. Thus, if a given model can answer a question without reference to the context (by avoiding reference to the context when executing the language models on the first prompts), then such a question should be excluded from the list of questions at step 202.

Step 202 includes removing, from the natural language questions, a removed question to generate filtered questions. Again, the removed question includes a corresponding one of the natural language questions for which a corresponding test output of test outputs of the language models represents a correct answer relative to the correct answers. In other words, if a model answered a question correctly without reference to the context, then the correctly answered question is a "removed question" and is removed from the initial set of natural language questions.

Removing the removed question may be performed by deleting the question from the list of available questions. In an embodiment the removed question may be stored elsewhere for future reference, together with one or more identifiers that identify which model or models correctly answered the removed question. The questions that remain then may be referred to as filtered questions, as defined above with respect to FIG. 1.

In an embodiment, if fewer than a threshold number of questions remain after the removed questions have been removed, and the various language models each answered different questions correctly, then a different set of filtered questions may be tracked for each language model. Thus, each language model may have a set of filtered questions that has at least the threshold number of filtered questions remaining.

In still another embodiment, additional questions may be generated by applying one or more of the language models to the context to generate additional questions. Then, step 200 may be repeated on the additional questions until at least the threshold number of filtered questions remains.

Step 202 also may include executing, to generate a semantic similarity score, a semantic language model on the correct answers, and the corresponding test output. Then, a determination is made that the corresponding test output matches at least one of the correct answers when the semantic similarity score satisfies a semantic threshold value. Once the determination is made, the removed question may be removed as described with respect to step 202.

Similarly, step 202 may include comparing the correct answers to the corresponding test output and determining that the corresponding test output matches at least one of the correct answers. In this case, the corresponding one of the natural language questions to which the corresponding test belongs are identified. The corresponding one of the natural language questions are then removed as described with respect to step 202.

Step 204 includes executing the language models on filtered prompts to generate generated answers. Each of the filtered prompts includes the filtered questions and a corresponding command to return the generated answers from the context. The command may further command the language models to return the generated answers only from the context.

In other words, step 204 includes providing the filtered prompts to the language models and then commanding the language models to execute on the filtered prompts, but this time the filtered prompts either permit the language models to reference the context or command the language models to reference the context. The resulting generated answers are then processed as described with respect to step 206, below.

Step 204 also may include generating the filtered prompts. The filtered prompts may be generated by adding, to each of the filtered prompts, the filtered questions and adding, to each of the filtered prompts, the command. In addition, generating the filtered prompts may include adding, to each of the filtered prompts, a corresponding system message instructing a corresponding language model of the language models to output a structured language data structure or a vector. The structured language data structure or vector may then be further processed at step 206 or be used by some other computing process.

Step 206 includes executing a semantic model on the generated answers to generate scores representing accuracies of the language models. Step 206 may be performed by commanding the semantic model to analyze the semantic similarity between the generated answers and the corresponding known correct answers. The outputs of the semantic model are scores that represent the degree of semantic similarity, with a score of one representing a perfect match and a score of zero representing no match. Thus, the score represents the degree to which a corresponding language model correctly answers a question when the language model is commanded to reference the context to generate the answer.

Expressed differently, the semantic model includes a semantic similarity model. In this case, executing the semantic model includes inputting, to the semantic model, the generated answers and filtered correct answers corresponding to the filtered questions. Executing the semantic model causes the semantic model to generate, for each of the language models, individual scores representing semantic similarities between the filtered correct answers to filtered test outputs, including the test outputs less the corresponding test output.

In an embodiment, the individual scores may be combined into a combined score. The combined score includes one of the scores representing accuracies of the language models. Then, the method also includes outputting by the semantic model, as the scores, combined scores generated for the each of the language models. The scores, again, represent the accuracy of a corresponding language model with respect to retrieving answers from a context.

In an embodiment, the method also may include selecting a best score from among the scores. The best score may be a highest score among the scores, though other standards for evaluating "best" may exist. Then, the method may include identifying, according to the best score, a deployment language model from among the language models. The method also may include deploying, on an enterprise system, the deployment language model.

The method of FIG. 2 may be varied. For example, the method of FIG. 2 also may include additional steps. In an embodiment, the method of FIG. 2 may include selecting, according to the scores, a selected language model from the language models. In this case, the method also may include deploying the selected language model on a server.

The method may be further extended. For example, the method of FIG. 2 also may include receiving a user query from a user device. The method then also may include executing the selected language model on the user query to generate a query response. The method then also may include returning the query response to the user device. In this manner, the most accurate language model may be identified and subsequently used to generate the most accurate answers possible in response to user queries.

In another variation, the method of FIG. 2 may be extended to include selecting, according to the scores, a selected language model from the language models. The selected language model may be recommended to the user by means of a link to the selected language model, and the link presented to the user on a graphical user interface.

In another variation, another link may be generated and presented to the user via the graphical user interface. The link may be presented by transmitting the link in an electronic message. The message may be displayed on a user device, such as on a graphical user interface, and thereafter accessed by a user. The link may be accessed by an automated process without being displayed on the user interface. The link may be a link to the selected language model. The link may be a link to the scores, or a combination thereof, as shown in FIG. 4B.

In yet another variation, the method of FIG. 2 also may include, prior to step 200, generating a question generation prompt that instructs a question generation language model to generate questions answerable by reference to the context. In this case, the method also includes executing the question generation language model on the question generation prompt and the context. The question generation language model outputs the natural language questions. The natural language questions are referenced by or contained in the first prompts.

The method of FIG. 2 may be extended to further improve the language models. For example, the method of FIG. 2 also may include selecting a selected language model from among the language models. The selected language model has a highest score among the scores. In this case, the method of FIG. 2 also may include retraining the selected language model on training data including at least the removed questions and filtered correct answers corresponding to ones of the correct answers to which the removed questions correspond.

As explained with respect to FIG. 1B, retraining the language model changes the model. Because better training data is available after executing the method of FIG. 2, the resulting re-trained (or fine-tuned) language model is improved relative to the prior version of the language model. Thus, the method of FIG. 2 also may be used as part of improving a language model to more accurately process queries that are constrained to reference the context (and possibly also to avoid using any source other than the context to answer the query).

While the various steps in this flowchart are presented and described sequentially, at least some of the steps may be executed in different orders, may be combined or omitted, and at least some of the steps may be executed in parallel. Furthermore, the steps may be performed actively or passively.

FIG. 3 shows a dataflow for a method for generating an improved retrieval augmented generation language model system. The data flow of FIG. 3 is a variation of the method of the system shown in FIG. 1A and the method of FIG. 2.

A context (300), stored in a database, is available. In the example of FIG. 3, language models ideally should only return a correct answer to a query when the correct answer to the query is contained in the context (300).

A question generation model (302) is commanded to generate questions that are answerable by the context (300). The question generation model (302) may be one or more of the language models (310) described below, or may be some other language model. Thus, one or more prompts are generated that command the question generation model (302) to generate the questions from the context (300).

The outputs of the question generation model (302) are a set of generated questions (304). The generated questions (304) are, again, questions that are answerable by reference to the context (300).

The generated questions (304) are then provided to a prompt generation model (306). The prompt generation model (306) is one or more language models (and may be one or more of the language models (310) described below). The prompt generation model (306) is commanded to generate prompts for execution by the language models (310). The prompts contain or reference one or more of the generated questions (304). In an embodiment, a set of prompts is generated for each of the language models (310). Each set of prompts may include one or more of the generated questions (304). For example, in an embodiment, each of the generated questions (304) is included or referenced in a prompt which will be provided to a corresponding one of the language models (310). In another embodiment, a single prompt may be generated with a set of questions, and the single prompt copied to the various language models (310).

The output of the prompt generation model (306) is generated test prompts (308). The generated test prompts (308) do not reference the context (300). In an embodiment, the generated test prompts (308) explicitly command the language models (310) to avoid referencing the context (300) when executing on the generated test prompts (308).

The language models (310) then execute on the generated test prompts (308). The output of the language models (310) are generated test outputs (312). The generated test outputs (312) are referred to as "test" outputs because the questions are being evaluated to determine which questions cause one or more of the language models (310) to generate correct answers (again without reference to the context (300)).

At process (314), a server controller identifies correct answers among the generated test outputs (312). The server controller may execute a semantic model, as described with respect to step 206 of FIG. 2, to identify which of the answers are correct answers. The output of the process (314) is a number of correct answers (316).

At process (318), the questions corresponding to the correct answers (316) are removed by a server controller, also as described with respect to step 206 of FIG. 2. The questions that remain, *i.e.,* the filtered questions (320), are the output of the process (318).

A similar process is then repeated using the prompt generation model (322) (which may be the prompt generation model (306) or a different model), but this time using the filtered questions (320). Thus, the filtered questions (320) are provided as input to the prompt generation model (322). The output of the prompt generation model (322) is a set of filtered prompts (324). The filtered prompts (324) at least permits the language models (326) (which are the same models as the language models (310)) to reference the context (300). However, in an embodiment, the filtered prompts (324) explicitly command the language models (326) to answer the filtered questions (320) by reference to the context (300).

The language models (326) (which, again, are the same models as the language models (310)) then execute on the filtered prompts (324). The output of the language models (326) are a set of generated answers (328).

The generated answers (328) are then provided as input to a semantic model (330), together with known correct answers to the corresponding filtered questions (320) taken from the context (300). The semantic model (330) evaluates the correctness of the generated answers (328) by comparing the semantic similarities of the generated answers (328) to the known correct answers from the context (300).

Thus, each of the language models (326) may have answered the same multiple questions and each of the language models (326) may have generated their own sets of generated multiple answers to the multiple questions. For each answer, the answer of one model is compared to the corresponding known correct answer, and the semantic model (330) generates a semantic score that represents the semantic closeness of the generated answer to the known correct answer. Because the model generated multiple answers to multiple questions, the process is repeated to generate a set of semantic scores. Thus, each of the language models (326) has a corresponding set of semantic scores.

The set of semantic scores may be averaged to generate one score for a selected one of the language models (326). In an embodiment, the server controller may perform a weighted average of each set of scores if certain of the filtered questions (320) are considered more important than others.

In any case, a number of language model scores (332) are generated. Each of the prompt generation model (322) is the corresponding average score for one of the language models (326). The number of language model scores (332) represent the overall accuracy of the corresponding language models (326) when commanded to answer questions from the context (300).

At process (334), the server controller selects one or more selected models. For example, the selected language model may be one of the language models (326) that has a highest score among the number of language model scores (332). However, the selected language model may be one of several of the language models (326) that had equivalent highest scores, or scores within a pre-determined range of scores.

The language model, from among the language models (326), that is selected is referred to as the selected model (336). The selected model (336) is then made available to a server (338) or some other computer processing component of an enterprise system.

Then, when a user (340) submits a user query (342) to the server (338), the server (338) executes the selected model (336) on the user query (342). The selected model (336) is commanded, by way of a prompt which includes not only the user query (342) but also at least a command to reference the context (300) when generating the answer, to generate an answer to the user query (342). The resulting query response (344) is output from the selected model (336). The server (338) then returns the query response (344) to the user (340).

FIG. 4A and FIG. 4B show a graphical user interface for efficiently displaying results of a method for an improved retrieval augmented generation language model system. The graphical user interface (400) shown in FIG. 4A may be the graphical user interface (132) of FIG. 1A.

In an embodiment, a number of language models (402) are evaluated according to the method described with respect to FIG. 2 or the data flow described with respect to FIG. 3. A server then generates the graphical user interface (400). The server also generates a link (404), and embeds the link (404) in the graphical user interface (400). The link (404) is a link to the selected language model, or is a link to a chatbot (or other software) which uses the selected language model to respond to user queries. The graphical user interface (400) is then presented to a user. The user may select the link (404) when the user desires to submit a user query to the server.

In another embodiment, the link (404) may be a link to the scores described above with respect to FIG. 3. Thus, the server may generate the link (404), embed the link (404) in the graphical user interface (400) or otherwise modify the graphical user interface (400) to display the link (404), and display the graphical user interface (400) to the user. The user then may select the link in the graphical user interface (400) to access the scores.

FIG. 4B shows an expanded graphical user interface (406). The expanded graphical user interface (406) may be presented to the user after the user selects the link (404) in the graphical user interface (400) of FIG. 4A. The expanded graphical user interface (406) shows a selected language model (408), which may be the selected model (336) of FIG. 3. A selected score (410), which is the average score generated for the selected language model (408), also may be displayed in the expanded graphical user interface (406).

Other scores for other language models also may be displayed. For example, language model A (412) having score A (418), language model B (414) having score B (420), and language model C (416) having score C (422), all may be displayed in the expanded graphical user interface (406). In this manner, the user may see the various language models under test and understand the relative effectiveness of each language model with respect to correctly answering questions from a context. The user may select one of the other language models, other than the selected language model (408), if desired, by selecting one of the language models being displayed.

One or more embodiments may be implemented on a computing system specifically designed to achieve an improved technological result. When implemented in a computing system, the features and elements of the disclosure provide a significant technological advancement over computing systems that do not implement the features and elements of the disclosure. Any combination of mobile, desktop, server, router, switch, embedded device, or other types of hardware may be improved by including the features and elements described in the disclosure.

For example, as shown in FIG. 5A, the computing system (500) may include one or more computer processor(s) (502), non-persistent storage device(s) (504), persistent storage device(s) (506), a communication interface (508) (*e.g.,* Bluetooth interface, infrared interface, network interface, optical interface, *etc.),* and numerous other elements and functionalities that implement the features and elements of the disclosure. The computer processor(s) (502) may be an integrated circuit for processing instructions. The computer processor(s) (502) may be one or more cores, or micro-cores, of a processor. The computer processor(s) (502) includes one or more processors. The computer processor(s) (502) may include a central processing unit (CPU), a graphics processing unit (GPU), a tensor processing unit (TPU), combinations thereof, *etc.*

The input device(s) (510) may include a touchscreen, keyboard, mouse, microphone, touchpad, electronic pen, or any other type of input device. The input device(s) (510) may receive inputs from a user that are responsive to data and messages presented by the output device(s) (512). The inputs may include text input, audio input, video input, *etc.,* which may be processed and transmitted by the computing system (500) in accordance with one or more embodiments. The communication interface (508) may include an integrated circuit for connecting the computing system (500) to a network (not shown) (*e.g.,* a local area network (LAN), a wide area network (WAN) such as the Internet, mobile network, or any other type of network) or to another device, such as another computing device, and combinations thereof.

Further, the output device(s) (512) may include a display device, a printer, external storage, or any other output device. One or more of the output device(s) (512) may be the same or different from the input device(s) (510). The input device(s) (510) and output device(s) (512) may be locally or remotely connected to the computer processor(s) (502). Many different types of computing systems exist, and the aforementioned input device(s) (510) and output device(s) (512) may take other forms. The output device(s) (512) may display data and messages that are transmitted and received by the computing system (500). The data and messages may include text, audio, video, *etc.,* and include the data and messages described above in the other figures of the disclosure.

Software instructions in the form of computer readable program code to perform embodiments may be provided, in whole or in part, temporarily or permanently, by a computer readable medium. A computer readable medium may be a computer readable storage medium (for example a non-transitory computer readable medium) such as a solid state drive (SSD), compact disk (CD), digital video disk (DVD), storage device, a diskette, a tape, flash memory, physical memory, or any other computer readable storage medium. A computer-readable medium may also or alternatively be a transmission medium by which instructions may be conveyed. A computer-readable transmission medium may include carrier waves, transmission signals or the like. A computer-readable transmission medium may convey instructions between components of a single computer system and/or between plural separate computer systems. Specifically, the software instructions may correspond to computer readable program code that, when executed by the computer processor(s) (502), is configured to perform one or more embodiments, which may include transmitting, receiving, presenting, and displaying data and messages described in the other figures of the disclosure.

The computing system (500) in FIG. 5A may be connected to, or be a part of, a network. For example, as shown in FIG. 5B, the network (520) may include multiple nodes *(e.g.,* node X (522) and node Y (524), as well as extant intervening nodes between node X (522) and node Y (524)). Each node may correspond to a computing system, such as the computing system shown in FIG. 5A, or a group of nodes combined may correspond to the computing system shown in FIG. 5A. By way of an example, embodiments may be implemented on a node of a distributed system that is connected to other nodes. By way of another example, embodiments may be implemented on a distributed computing system having multiple nodes, where each portion may be located on a different node within the distributed computing system. Further, one or more elements of the aforementioned computing system (500) may be located at a remote location and connected to the other elements over a network.

The nodes (*e.g.,* node X (522) and node Y (524)) in the network (520) may be configured to provide services for a client device (526). The services may include receiving requests and transmitting responses to the client device (526). For example, the nodes may be part of a cloud computing system. The client device (526) may be a computing system, such as the computing system shown in FIG. 5A. Further, the client device (526) may include or perform all or a portion of one or more embodiments.

The computing system of FIG. 5A may include functionality to present data (including raw data, processed data, and combinations thereof) such as results of comparisons and other processing. For example, presenting data may be accomplished through various presenting methods. Specifically, data may be presented by being displayed in a user interface, transmitted to a different computing system, and stored. The user interface may include a graphical user interface (GUI) that displays information on a display device. The GUI may include various GUI widgets that organize what data is shown, as well as how data is presented to a user. Furthermore, the GUI may present data directly to the user, *e.g.,* data presented as actual data values through text, or rendered by the computing device into a visual representation of the data, such as through visualizing a data model.

Therefore, from one perspective, there have been described approaches for an improved retrieval augmented generation (RAG) language model ensemble. The language models are executed on first prompts to generate test outputs. Each of the first prompts includes a natural language question corresponding to correct answers only obtainable from the context. The prompts are assigned to each of the language models. The prompts avoid referencing the context. A removed question is removed to generate filtered questions. The removed question includes a corresponding one of the natural language questions for which a corresponding test output of the test outputs represents a correct answer relative to the correct answers. The language models are executed on filtered prompts to generate generated answers. Each of the filtered prompts includes the filtered questions and a corresponding command to return the generated answers from the context. A semantic model is executed on the generated answers to generate scores representing accuracies of the language models.

Further examples of feature combinations taught by the present disclosure are set out in the following numbered clauses.

Clause 1. A method of improving a retrieval augmented generation (RAG) language model ensemble comprising a plurality of language models and a context assigned to the RAG language model ensemble, the method comprising: executing the plurality of language models on a plurality of first prompts to generate a plurality of test outputs, wherein: each of the plurality of first prompts comprises one of a plurality of natural language questions corresponding to a plurality of correct answers, the plurality of correct answers are only obtainable from the context, the plurality of prompts is assigned to each of the plurality of language models, and each of the plurality of prompts avoids referencing the context; removing, from the plurality of natural language questions, a removed question to generate a plurality of filtered questions, wherein: the removed question comprises a corresponding one of the plurality of natural language questions for which a corresponding test output of the plurality of test outputs represents a correct answer relative to the plurality of correct answers; executing the plurality of language models on a plurality of filtered prompts to generate generated answers, wherein each of the plurality of filtered prompts comprises the plurality of filtered questions and a corresponding command to return the generated answers from the context; and executing a semantic model on the generated answers to generate a plurality of scores representing accuracies of the plurality of language models.

Clause 2. The method of clause 1, further comprising: selecting, according to the plurality of scores, a selected language model from the plurality of language models; and deploying the selected language model on a server.

Clause 3. The method of clause 2, further comprising: receiving a user query from a user device; executing the selected language model on the user query to generate a query response; and returning the query response to the user device.

Clause 4. The method of clause 1, 2 or 3, further comprising: selecting, according to the plurality of scores, a selected language model from the plurality of language models; and presenting a link to the selected language model.

Clause 5. The method of any preceding clause, further comprising generating the plurality of natural language questions by: generating a question generation prompt instructing a question generation language model to generate questions answerable by reference to the context; and executing the question generation language model on the question generation prompt and the context, wherein the question generation language model outputs the plurality of natural language questions.

Clause 6. The method of any preceding clause, further comprising generating the plurality of filtered prompts by: adding, to each of the plurality of filtered prompts, the plurality of filtered questions; and adding, to each of the plurality of filtered prompts, the corresponding command.

Clause 7. The method of clause 6, further comprising: adding, to each of the plurality of filtered prompts, a corresponding system message instructing a corresponding language model of the plurality of language models to output a structured language data structure.

Clause 8. The method of any preceding clause further comprising identifying the corresponding one of the plurality of natural language questions for which the corresponding test output represents the correct answer by: executing, to generate a semantic similarity score, a semantic language model on the plurality of correct answers and the corresponding test output; and determining that the corresponding test output matches at least one of the plurality of correct answers when the semantic similarity score satisfies a semantic threshold value.

Clause 9. The method of any preceding clause, further comprising identifying the corresponding one of the plurality of natural language questions for which the corresponding test output represents the correct answer by: comparing the plurality of correct answers to the corresponding test output and determining that the corresponding test output matches at least one of the plurality of correct answers; and identifying the corresponding one of the plurality of natural language questions to which the corresponding test output belongs.

Clause 10. The method of any preceding clause, wherein the corresponding command further commands the plurality of language models to return the generated answers only from the context.

Clause 11. The method of any preceding clause wherein the semantic model comprises a semantic similarity model and wherein executing the semantic model comprises: inputting, to the semantic model, the generated answers and a plurality of filtered correct answers corresponding to the plurality of filtered questions, wherein executing the semantic model causes the semantic model to: generate, for each of the plurality of language models, a plurality of individual scores representing semantic similarities between the filtered plurality of correct answers to a plurality of filtered test outputs comprising the plurality of test outputs less the corresponding test output, and combine the plurality of individual scores into a combined score, wherein the combined score comprises one of the plurality of scores representing accuracies of the plurality of language models; and outputting by the semantic model, as the plurality of scores, a plurality of combined scores generated for the each of the plurality of language models.

Clause 12. The method of clause 11, further comprising: selecting a best score from among the plurality of scores; identifying, according to the best score, a deployment language model from among the plurality of language models; and deploying, on an enterprise system, the deployment language model.

Clause 13. The method of clause 12, wherein the best score comprises a highest score among the plurality of scores.

Clause 14. The method of any preceding clause, further comprises: selecting a selected language model from among the plurality of language models, wherein the selected language model has a highest score among the plurality of scores; and retraining the selected language model on training data comprising at least the removed question and a filtered correct answer.

Clause 15. A system for improving a retrieval augmented generation (RAG) language model ensemble comprising a plurality of language models and a context assigned to the RAG language model ensemble, the system comprising: a computer processor; a server in communication with the computer processor; a data repository in communication with the computer processor and storing: the context, a plurality of natural language questions, a plurality of correct answers, only obtainable from the context, to the plurality of natural language questions, a first plurality of prompts, each comprising one of the plurality of natural language questions, wherein the plurality of first prompts avoids referencing the context, a removed question comprising a corresponding one of the plurality of natural language questions for which a corresponding test output of a plurality of test outputs of the plurality of language models represents a correct answer relative to the plurality of correct answers, a plurality of filtered questions comprising the plurality of natural language questions less the removed question, a plurality of filtered prompts comprising the plurality of filtered questions and a corresponding command to return generated answers from the context, a plurality of scores representing accuracies of the plurality of language models; the plurality of language models which, when executed by the computer processor: generates the plurality of test outputs when executed on the first plurality of prompts, and generates the generated answers when executed on the plurality of filtered prompts; a semantic model which, when executed by the computer processor on the generated answers generates the plurality of scores; and a server controller which, when executed by the computer processor: selects, according to the plurality of scores, a selected language model from among the plurality of language models, and deploys the selected language model to the server for execution of the selected language model.

Clause 16. The system of clause 15, further comprising: a network communication device in communication with the computer processor and programmed to receive a user query from a user device, wherein the server controller is further programmed to generate a response by executing the selected language model on the user query and to return the response to the user device.

Clause 17. The system of clause 15 or 16, further comprising: a graphical user interface generated by the server, wherein the server controller is further programmed to: generate a link to the plurality of scores; and modify the graphical user interface to display the link.

Clause 18. The system of clause 15, 16 or 17, further comprising: a semantic model which, when executed by the computer processor, generates the plurality of scores.

Clause 19. The system of any of clauses 15 to 18, wherein the server controller is further programmed to: generate the plurality of first prompts and the plurality of filtered prompts.

Clause 20. A method of improving a retrieval augmented generation (RAG) language model ensemble comprising a plurality of language models and a context assigned to the RAG language model ensemble, the method comprising: executing the plurality of language models on a plurality of first prompts to generate a plurality of test outputs, wherein: each of the plurality of first prompts comprises one of a plurality of natural language questions corresponding to a plurality of correct answers, the plurality of correct answers are only obtainable from the context, the plurality of prompts is assigned to each of the plurality of language models, and each of the plurality of prompts avoids referencing the context; removing, from the plurality of natural language questions, a removed question to generate a plurality of filtered questions, wherein: the removed question comprises a corresponding one of the plurality of natural language questions for which a corresponding test output of the plurality of test outputs represents a correct answer relative to the plurality of correct answers; executing the plurality of language models on a plurality of filtered prompts to generate generated answers, wherein each of the plurality of filtered prompts comprises the plurality of filtered questions and a corresponding command to return the generated answers from the context; executing a semantic model on the generated answers to generate a plurality of scores representing accuracies of the plurality of language models; selecting, according to the plurality of scores, a selected language model from the plurality of language models; deploying the selected language model on a server; receiving a user query from a user device; executing the selected language model on the user query to generate a query response; and returning the query response to the user device.

As used herein, the term "connected to" contemplates multiple meanings. A connection may be direct or indirect (*e.g.,* through another component or network). A connection may be wired or wireless. A connection may be a temporary, permanent, or a semi-permanent communication channel between two entities.

The various descriptions of the figures may be combined and may include, or be included within, the features described in the other figures of the application. The various elements, systems, components, and steps shown in the figures may be omitted, repeated, combined, or altered as shown in the figures. Accordingly, the scope of the present disclosure should not be considered limited to the specific arrangements shown in the figures.

In the application, ordinal numbers (*e.g.,* first, second, third, *etc.*) may be used as an adjective for an element (*i.e.,* any noun in the application). The use of ordinal numbers is not to imply or create any particular ordering of the elements, nor to limit any element to being only a single element unless expressly disclosed, such as by the use of the terms "before", "after", "single", and other such terminology. Rather, ordinal numbers distinguish between the elements. By way of an example, a first element is distinct from a second element, and the first element may encompass more than one element and succeed (or precede) the second element in an ordering of elements.

Further, unless expressly stated otherwise, the conjunction "or" is an inclusive "or" and, as such, automatically includes the conjunction "and," unless expressly stated otherwise. Further, items joined by the conjunction "or" may include any combination of the items with any number of each item, unless expressly stated otherwise.

In the above description, numerous specific details are set forth in order to provide a more thorough understanding of the disclosure. However, it will be apparent to one of ordinary skill in the art that the technology may be practiced without these specific details. In other instances, well-known features have not been described in detail to avoid unnecessarily complicating the description. Further, other embodiments not explicitly described above can be devised which do not depart from the scope of the claims as disclosed herein. Accordingly, the scope should be limited only by the attached claims.

## Claims

1. A method of improving a retrieval augmented generation (RAG) language model ensemble comprising a plurality of language models and a context assigned to the RAG language model ensemble, the method comprising:
executing the plurality of language models on a plurality of first prompts to generate a plurality of test outputs, wherein:
each of the plurality of first prompts comprises one of a plurality of natural language questions corresponding to a plurality of correct answers,
the plurality of correct answers are only obtainable from the context,
the plurality of prompts is assigned to each of the plurality of language models, and
each of the plurality of prompts avoids referencing the context;
removing, from the plurality of natural language questions, a removed question to generate a plurality of filtered questions, wherein:
the removed question comprises a corresponding one of the plurality of natural language questions for which a corresponding test output of the plurality of test outputs represents a correct answer relative to the plurality of correct answers;
executing the plurality of language models on a plurality of filtered prompts to generate generated answers, wherein each of the plurality of filtered prompts comprises the plurality of filtered questions and a corresponding command to return the generated answers from the context; and
executing a semantic model on the generated answers to generate a plurality of scores representing accuracies of the plurality of language models.

2. The method of claim 1, further comprising:
selecting, according to the plurality of scores, a selected language model from the plurality of language models; and
deploying the selected language model on a server.

3. The method of claim 2, further comprising:
receiving a user query from a user device;
executing the selected language model on the user query to generate a query response; and
returning the query response to the user device.

4. The method of claim 1, 2 or 3, further comprising:
selecting, according to the plurality of scores, a selected language model from the plurality of language models; and
presenting a link to the selected language model.

5. The method of any preceding claim, further comprising generating the plurality of natural language questions by:
generating a question generation prompt instructing a question generation language
model to generate questions answerable by reference to the context; and executing the question generation language model on the question generation prompt and
the context, wherein the question generation language model outputs the plurality of natural language questions.

6. The method of any preceding claim, further comprising generating the plurality of filtered prompts by:
adding, to each of the plurality of filtered prompts, the plurality of filtered questions; and
adding, to each of the plurality of filtered prompts, the corresponding command;
and, for example, adding, to each of the plurality of filtered prompts, a corresponding system message instructing a corresponding language model of the plurality of language models to output a structured language data structure.

7. The method of any preceding claim, further comprising identifying the corresponding one of the plurality of natural language questions for which the corresponding test output represents the correct answer by one or more selected from the group comprising:
executing, to generate a semantic similarity score, a semantic language model on the plurality of correct answers and the corresponding test output, and determining that the corresponding test output matches at least one of the plurality of correct answers when the semantic similarity score satisfies a semantic threshold value; and
comparing the plurality of correct answers to the corresponding test output and determining that the corresponding test output matches at least one of the plurality of correct answers, and identifying the corresponding one of the plurality of natural language questions to which the corresponding test output belongs.

8. The method of any preceding claim, wherein the corresponding command further commands the plurality of language models to return the generated answers only from the context.

9. The method of any preceding claim wherein the semantic model comprises a semantic similarity model and wherein executing the semantic model comprises:
inputting, to the semantic model, the generated answers and a plurality of filtered correct answers corresponding to the plurality of filtered questions,
wherein executing the semantic model causes the semantic model to:
generate, for each of the plurality of language models, a plurality of individual scores representing semantic similarities between the filtered plurality of correct answers to a plurality of filtered test outputs comprising the plurality of test outputs less the corresponding test output, and
combine the plurality of individual scores into a combined score, wherein the combined score comprises one of the plurality of scores representing accuracies of the plurality of language models; and
outputting by the semantic model, as the plurality of scores, a plurality of combined scores generated for the each of the plurality of language models.

10. The method of claim 11, further comprising:
selecting a best score from among the plurality of scores, for example wherein the best score comprises a highest score among the plurality of scores;
identifying, according to the best score, a deployment language model from among the plurality of language models; and
deploying, on an enterprise system, the deployment language model.

11. The method of any preceding claim, further comprises:
selecting a selected language model from among the plurality of language models, wherein the selected language model has a highest score among the plurality of scores; and
retraining the selected language model on training data comprising at least the removed question and a filtered correct answer.

12. A system for improving a retrieval augmented generation (RAG) language model ensemble comprising a plurality of language models and a context assigned to the RAG language model ensemble, the system comprising:
a computer processor;
a server in communication with the computer processor;
a data repository in communication with the computer processor and storing:
the context,
a plurality of natural language questions,
a plurality of correct answers, only obtainable from the context, to the plurality of natural language questions,
a first plurality of prompts, each comprising one of the plurality of natural language questions, wherein the plurality of first prompts avoids referencing the context,
a removed question comprising a corresponding one of the plurality of natural language questions for which a corresponding test output of a plurality of test outputs of the plurality of language models represents a correct answer relative to the plurality of correct answers,
a plurality of filtered questions comprising the plurality of natural language questions less the removed question,
a plurality of filtered prompts comprising the plurality of filtered questions and a corresponding command to return generated answers from the context,
a plurality of scores representing accuracies of the plurality of language models;
the plurality of language models which, when executed by the computer processor:
generates the plurality of test outputs when executed on the first plurality of prompts, and
generates the generated answers when executed on the plurality of filtered prompts;
a semantic model which, when executed by the computer processor on the generated answers generates the plurality of scores; and
a server controller which, when executed by the computer processor:
selects, according to the plurality of scores, a selected language model from among the plurality of language models, and
deploys the selected language model to the server for execution of the selected language model.

13. The system of claim 12, further comprising:
a network communication device in communication with the computer processor and programmed to receive a user query from a user device,
wherein the server controller is further programmed to generate a response by executing the selected language model on the user query and to return the response to the user device.

14. The system of claim 12 or 13, further comprising:
a graphical user interface generated by the server,
wherein the server controller is further programmed to:
generate a link to the plurality of scores; and
modify the graphical user interface to display the link.

15. The system of claim 12, 13 or 14, further comprising:
a semantic model which, when executed by the computer processor, generates the plurality of scores.
